# EUROPÄISCHE PATENTSCHRIFT

(11) **EP 3 751 691 B1**
(45) Veröffentlichungstag und Bekanntmachung des Hinweises auf die Patenterteilung: **07.09.2022**
(21) Anmeldenummer: 20179645.5
(22) Anmeldetag: 12.06.2020
(51) Int. Cl.: H02J 1/12, H02J 3/38, H02M 7/5387

(54) **ELEKTROENERGIESYSTEM**
ELECTRICAL POWER SYSTEM
SYSTÈME D'ALIMENTATION ÉLECTRIQUE

(30) Priorität: 12.06.2019 DE 102019115916
(43) Veröffentlichungstag der Anmeldung: 16.12.2020
(73) Patentinhaber: Wobben Properties GmbH, 26607 Aurich (DE)
(72) Erfinder: Brombach, Johannes, 13437 Berlin (DE)
(74) Vertreter: Eisenführ Speiser

(56) Entgegenhaltungen:
- US-A1- 2012 299 386
- US-A1- 2018 198 276

## Beschreibung

Die vorliegende Erfindung betrifft ein Elektroenergiesystem gemäß Anspruch 1.

Üblicherweise werden zum Erzeugen elektrischer Energie unterschiedliche Kraftwerks- bzw. Erzeugertypen verwendet, wie beispielsweise Photovoltaikanlagen (kurz: PV) oder Windenergieanlagen.

Diese werden zumeist in großen Parks, den sogenannten Photovoltaikparks oder Windparks, zu einem Erzeuger elektrischer Energie zusammengefasst und an einem Netzanschlusspunkt mit dem elektrischen Versorgungsnetz verbunden.

Solche Photovoltaik- bzw. Windparks haben üblicherweise den Nachteil, dass sie den Netzanschlusspunkt nicht oder nur selten vollständig auslasten, beispielsweise im Falle von Windenergieanlagen, wenn kein oder nur schwacher Wind weht oder im Falle von Photovoltaikanlagen, wenn kaum oder gar keine Sonne scheint.

Die Anmeldung US 2012/299386 A1 offenbart ein Elektroenergiesystem wenigstens umfassend: ein elektrischen Gleichspannungsnetz mit einer variablen Zwischenkreis-Gleichspannung, einen Wechselrichter, der über einen Wechselrichter-DC-Eingang mit einer DC-Eingangs-Wechselrichter-Nennleistung mit dem elektrischen Gleichspannungsnetz verbunden ist und über einen Wechselrichter-AC-Ausgang mit einer AC-Ausgangs-Wechselrichter-Nennleistung mit einem elektrischen Versorgungsnetz verbunden ist, welches eine Wechselspannung aufweist, wobei der Wechselrichter Leistungselektronik aufweist die dazu eingerichtet ist, eine im elektrischen Gleichspannungsnetz befindliche DC-Leistung in das elektrische Versorgungsnetz einzuspeisen, eine Kennlinien-Steuerung zur Leistungsaufteilung umfassend eine Vielzahl von Gleichspannungs-Schwellwerten und eine Vielzahl von DC-Leistungs-Zwischenkreis-Gleichspannungs-Kennlinien mittels derer Systeme gesteuert werden, insbesondere individuell gesteuert werden, die mit dem elektrischen Gleichspannungsnetz verbunden sind, ein erstes System, wenigstens aufweisend eine Windenergieanlage mit einer Windenergieanlagen-Nennleistung zum Erzeugen einer elektrischen Windenergieanlagen-DC-Leistung, die mit dem elektrischen Gleichspannungsnetz verbunden ist und ein zweites System, wenigstens aufweisend eine Photovoltaikanlage mit einer Photovoltaikanlagen-Nennleistung zum Erzeugen einer elektrischen Photovoltaikanlagen-DC-Leistung, die mit dem elektrischen Gleichspannungsnetz verbunden ist, und ein drittes System, aufweisend einen bidirektionalen Energiespeicher. welcher in Abhängigkeit von der DC-Busspannung geladen und entladen wird.

Weiterer Stand der Technik ist CN 108 418 200 A, WO 2019/153 305 A1, US 2014/0285010 A1, US 2016/0214491 A1, US 2018/0329382 A1 und US 2018/198276 A1.

Aufgabe der vorliegenden Erfindung ist es daher, zumindest eines der oben genannten Probleme zu adressieren, insbesondere soll eine Lösung vorgeschlagen werden, die eine bessere Ausnutzung eines Netzanschlusspunktes ermöglicht. Zumindest aber soll eine Al- ternative zu bisher bekannten Lösungen vorgeschlagen werden.

Erfindungsgemäß wird somit ein Elektroenergiesystem gemäß Anspruch 1 vorgeschlagen, wenigstens umfas-
send: ein elektrischen Gleichspannungsnetz mit einer variablen Zwischenkreis-Gleichspannung, einen Wechselrichter, der über einen Wechselrichter-DC-Eingang mit einer DC-Eingangs-Wechselrichter-Nennleistung mit dem elektrischen Gleichspannungsnetz verbunden ist und über einen Wechselrichter-AC-Ausgang mit einer AC-Ausgangs-Wechselrichter-Nennleistung mit einem dreiphasigen, elektrischen Versorgungsnetz verbunden ist, welches eine Wechselspannung aufweist, wobei der Wechselrichter Leistungselektronik aufweist, die dazu eingerichtet ist, eine im elektrischen Gleichspannungsnetz befindliche DC-Leistung in das dreiphasige, elektrische Versorgungsnetz einzuspeisen, und eine Kennlinien-Steuerung zur Leistungsaufteilung umfassend eine Vielzahl von Gleichspannungs-Schwellwerten und eine Vielzahl von DC-Leistungs-Zwischenkreis-Gleichspannungs-Kennlinien mittels derer die Systeme gesteuert werden, insbesondere individuell gesteuert werden.

Das Elektroenergiesystem weist somit wenigstens ein elektrisches Gleichspannungsnetz auf, welches dazu eingerichtet ist, mit weiteren System verbunden zu werden, wie bspw. einer Windenergieanlage oder einem Batteriespeicher.

Zudem umfasst das Elektroenergiesystem eine Kennlinien-Steuerung, die dazu eingerichtet ist, eine Leistungsaufteilung innerhalb des Elektroenergiesystems vorzunehmen.

Die Kennlinien-Steuerung ist also dazu vorgesehen und dazu eingerichtet, all jene Systeme zu Steuern, die an das elektrische Gleichspannungsnetz angeschlossen werden.

Hierzu weißt die Kennlinien-Steuerung eine Vielzahl von Gleichspannungsschwellwerten sowie eine Vielzahl von DC-Leistungs-Zwischenkreis-Gleichspannungs-Kennlinien auf.

Es wird also insbesondere vorgeschlagen, dass das Elektroenergiesystem in Abhängigkeit einer variablen Zwischenkreis-Gleichspannung des elektrischen Gleichspannungsnetzes mittels Kennlinien, die auch als Statiken bezeichnet werden können, gesteuert wird.

Die Vielzahl der Gleichspannungsschwellwerte ist dabei insbesondere dazu vorgesehen, die einzelnen Systeme des Elektroenergiesystems ab Über- oder Unterschreiten eines bestimmten Schwellwertes an- bzw. abzufahren.

Es wird also auch vorgeschlagen, dass die einzelnen Systeme, die an das elektrische Gleichspannungsnetz angeschlossen sind, mittels Schwellwerten, insbesondere systemspezifischen Schwellwerten, gesteuert werden, bevorzugt unter der Verwendung von DC-Leistungs-Zwischenkreis-Gleichspannungs-Kennlinien.

Das An- bzw. Abfahren der einzelnen Systeme erfolgt dabei in Abhängigkeit der variablen Zwischenkreis-Gleichspannung, insbesondere mittels der Vielzahl von DC-Leistungs-Zwischenkreis-Gleichspannungs-Kennlinien.

Es wird also insbesondere vorgeschlagen, die Systeme, also bspw. die Wind- oder PV-Anlagen oder Batteriespeicher, mittels linearer Kennlinien bzw. Statiken zu steuern.

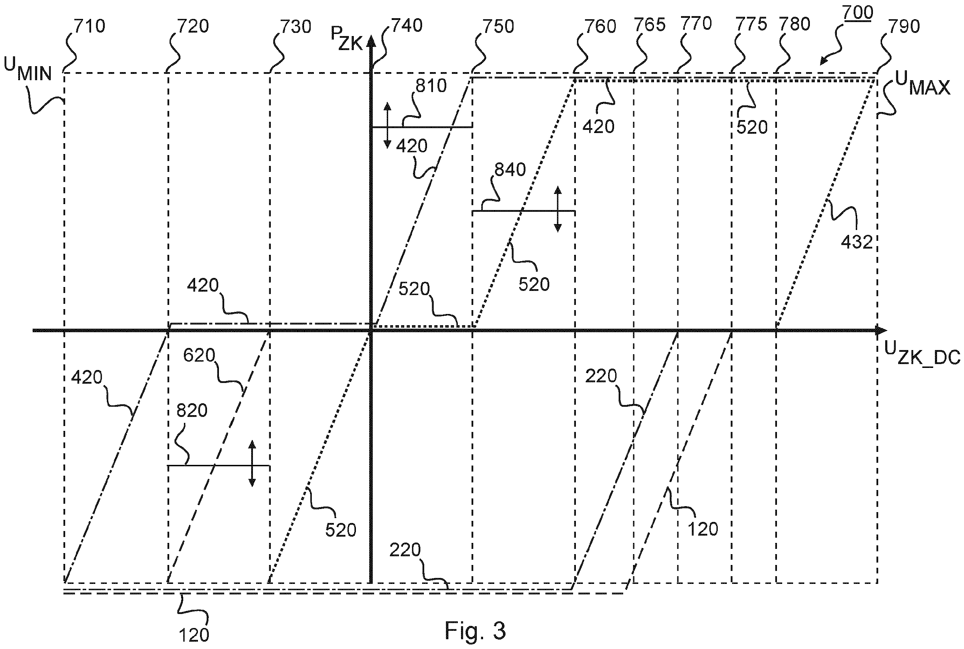

Die DC-Leistungs-Zwischenkreis-Gleichspannungs-Kennlinien können somit auch als Statiken bezeichnet werden. Der Abtrag für die Statiken erfolgt dabei in einem Koordinatensystem als DC-Leistungsbilanz über der variablen Gleichspannung des elektrischen Gleichspannungsnetzes, also Zwischenkreisleistung (kurz: P_{ZK}) über der variablen Gleichspannung des elektrischen Gleichspannungsnetzes (kurz: U_{ZK}__{DC}). Dies ist exemplarisch in Fig. 3 gezeigt.

Es wird somit vorgeschlagen, zur besseren Ausnutzung eines Netzanschlusspunktes, verschiedene Erzeuger, wie PV- und Windenergieanlagen, sowie Speicher und weitere Verbraucher mit einem gemeinsamen DC-System zu verbinden. Die Regelung eines solchen Elektroenergiesystems erfolgt dann über die einzelnen Erzeuger und Verbraucher mittels individueller Statiken.

Um dies effektiv gewährleisten zu können, insbesondere, damit die Systeme unterschiedlichste Arbeitspunkte einnehmen können, weist das elektrische Gleichspannungsnetz eine variable Gleichspannung auf, also eine Nenn-Spannung, die zwischen einer minimalen Gleichspannung (kurz: UMIN) und einer maximalen Gleichspannung (UMAX) variieren darf. Besonders vorteilhaft bei dem erfindungsgemäßen System ist zudem die Kombination aus PV und Wind, die es ermöglicht, die Leistungselektronik und insbesondere den Wechselrichter am Netzanschlusspunkt kleiner auszulegen, wodurch enorme Kosten gespart werden können. Dem liegt insbesondere die Erkenntnis zugrunde, dass bei Sonnenschein zumeist nur wenig Wind weht und anders herum, wodurch der Wechselrichter bspw. auf die Hälfte der Summe aus Windenergieanlagen- und Photovoltaikanlagen-Nennleistung ausgelegt werden kann.

Die Erfindung schafft somit eine dezentrale Regelung eines elektrischen Gleichspannungsnetzes eines Elektroenergiesystems, welche ohne aufwendige Kommunikation auskommt und somit äußerst kosteneffizient ist.

Erfindungsgemäß umfasst das Elektroenergiesystem ein erstes System, wenigstens aufweisend eine Windenergieanlage mit einer Windenergieanlagen-Nennleistung zum Erzeugen einer elektrischen Windenergieanlagen-DC-Leistung, die mit dem elektrischen Gleichspannungsnetz verbunden ist.

Das Elektroenergiesystem ist somit wenigstens als Erzeuger elektrischer Energie ausgebildet, insbesondere als regenerativer Erzeuger elektrischer Energie.

In einer bevorzugten Ausführungsform weist das Elektroenergiesystem keine konventionellen Erzeuger auf, wie bspw. Kohle- oder Atomkraftwerke.

In einer noch weiter bevorzugten Ausführungsform weist das Elektroenergiesystem und/oder das erste System genau eine Windenergieanlage auf.

Erfindungsgemäß umfasst das Elektroenergiesystem ein zweites System, wenigstens aufweisend eine Photovoltaikanlage (201) mit einer Photovoltaikanlagen-Nennleistung zum Erzeugen einer elektrischen Photovoltaikanlagen-DC-Leistung, die mit dem elektrischen Gleichspannungsnetz (300) verbunden ist.

Das Elektroenergiesystem umfasst also somit wenigstens zwei Systeme, nämlich eine Photovoltaik- und eine Windenergieanlage, die gemeinsam über ein elektrisches Gleichspannungsnetz mit variabler Gleichspannung über einen Wechselrichter mit einem elektrischen Versorgungsnetz verbunden sind. Ein solches Elektroenergiesystem kann auch als kombiniertes PV-Wind-Kraftwerk bezeichnet werden.

In einer Ausführungsform weist der Wechselrichter hierfür bspw. eine DC-Eingangs-Wechselrichter-Nennleistung auf, die im Wesentlichen 20 Prozent bis 80 Prozent, bevorzugt 40 Prozent bis 60 Prozent, der Summe der Windenergieanlagen-Nennleistung und der Photovoltaikanlagen-Nennleistung entspricht.

Erfindungsgemäß umfasst das Elektroenergiesystem ein drittes System, wenigstens aufweisend einen bi-direktionalen, elektrischen Speicher, der mit dem elektrischen Gleichspannungsnetz verbunden und dazu eingerichtet ist, eine elektrische Speicher-DC-Leistung aus dem elektrischen Gleichspannungsnetz aufzunehmen, wenn die Summe aus elektrischer Windenergieanlagen-DC-Leistung und elektrischer Photovoltaikanlagen-DC-Leistung größer ist als die DC-Eingangs-Wechselrichter-Nennleistung und eine elektrische Speicher-Leistung an das elektrische Gleichspannungsnetz abzugeben, wenn die Summe aus elektrischer Windenergieanlagen-DC-Leistung und elektrischer Photovoltaikanlagen-DC-Leistung kleiner ist als die DC-Eingangs-Wechselrichter-Nennleistung.

Das dritte System weist also wenigstens einen bi-direktionalen Speicher auf bzw. ist als dieser ausgebildet und mit dem elektrischen Gleichspannungssystem verbunden.

Bevorzugt ist der bi-direktionale Speicher über einen Gleichspannungswandler mit dem elektrischen Gleichspannungsnetz verbunden.

Der bi-direktionale Speicher hat dabei die Aufgabe, überschüssige elektrische Leistung aus dem elektrischen Gleichspannungsnetz zu entnehmen bzw. elektrische Leistung für das elektrische Gleichspannungsnetz bereitzustellen, wenn das elektrische Gleichspannungsnetz dies benötigt.

Es wird also insbesondere vorgeschlagen einen bi-direktionalen Speicher innerhalb des Elektroenergiesystems zu verwenden, um einen Leistungsüberschuss bzw. ein Leistungsdefizit innerhalb des Elektroenergiesystems auszuregeln. Weist das elektrische Gleichspannungsnetz zum Beispiel eine zu hohe Gleichspannung auf, entnimmt der bi-direktionale Speicher überschüssige Leistung. Dieser Überschuss kann bspw. dadurch zu Stande komme, dass das elektrische Versorgungsnetz die von den PV- und Windenergieanlagen erzeugte, elektrische Leistung nicht abnehmen kann. In solchen Fällen wird vorgeschlagen, die überschüssige Leistung in einem elektrischen Speicher zu speichern und bei Bedarf wieder abzugeben.

In einer bevorzugten Ausführungsform weist der elektrische Speicher eine maximale elektrische Leistung auf, die zwischen 5 Prozent und 20 Prozent der Windenergieanlagen-Nennleistung beträgt, bevorzugt ca. 10 Prozent.

In einer weiteren Ausführungsform weist der bi-direktionale elektrische Speicher einen Energiegehalt von ca. 10 Minuten der Nenn-Leistung des Elektroenergiesystems auf. Vorzugsweise umfasst das Elektroenergiesystem ferner ein viertes System, wenigstens aufweisend eine uni-direktionale, elektrische Last, die mit dem elektrischen Gleichspannungsnetz verbunden und dazu eingerichtet ist, eine elektrische Lade-Leistung aus dem elektrischen Gleichspannungsnetz aufzunehmen, wenn die Summe aus elektrischer Windenergieanlagen-DC-Leistung und elektrischer Photovoltaikanlagen-DC-Leistung größer ist als die DC-Eingangs-Wechselrichter-Nennleistung, die aufgenommene Lade-Leistung zu speichern und die gespeicherte, aufgenommene Lade-Leistung bei Bedarf abzugeben, insbesondere an einen beweglichen elektrischen Speicher.

Bevorzugt ist die uni-direktionale, elektrische Last hierfür mittels eines Gleichspannungswandlers mit dem elektrischen Gleichspannungsnetz verbunden.

Zudem ist die uni-direktionale, elektrische Last wenigstens dazu eingerichtet, elektrische Leistung aus dem elektrischen Gleichspannungsnetz zu entnehmen, wenn die variable Zwischenkreis-Gleichspannung einen vorbestimmten Wert bzw. einen Schwellwert überschreitet.

Es wird somit insbesondere auch vorgeschlagen, dass die uni-direktionale, elektrische Last am Spannungsgleichgewicht des elektrischen Gleichspannungsnetzes mitwirkt.

In einer weiter bevorzugten Ausführungsform ist die uni-direktionale, elektrische Last dazu eingerichtet, gespeicherte Leistung bei Bedarf an ein elektrisches Fahrzeug abzugeben bzw. ist die uni-direktionale, elektrische Last als Autoladestation ausgebildet.

In einer bevorzugten Ausführungsform weist die elektrische Last eine maximale elektrische Leistung auf, die zwischen 5 Prozent und 20 Prozent der Windenergieanlagen-Nennleistung beträgt, bevorzugt ca. 10 Prozent.

Vorzugsweise umfasst das Elektroenergiesystem ein fünftes System, wenigstens aufweisend eine Umwandlungsvorrichtung, insbesondere eine Chopper-Steuerung und/oder einen Chopper-Widerstand, die mit dem elektrischen Gleichspannungsnetz verbunden und dazu eingerichtet ist, elektrische Energie in Wärme umzuwandeln, wenn die Summe aus elektrischer Windenergieanlagen-DC-Leistung und elektrischer Photovoltaikanlagen-DC-Leistung größer ist als die DC-Eingangs-Wechselrichter-Nennleistung.

Die Umwandlungsvorrichtung ist also beispielsweise als eine Chopper-Steuerung und/oder ein Chopper-Widerstand ausgebildet, insbesondere um überschüssige Leistung aus dem elektrischen Gleichspannungsnetz thermisch umzuwandeln.

Hierfür kann die Umwandlungsvorrichtung beispielsweise im Wechselrichter integriert werden oder als separates System am elektrischen Gleichspannungsnetz mittels eines Gleichspannungswandlers angeschlossen werden.

Die Umwandlungsvorrichtung ist zudem dazu eingerichtet, ab Überschreiten eines Schwellwertes elektrische Energie aus dem elektrischen Gleichspannungsnetz zu entnehmen.

Vorzugsweise weist die Kennlinien-Steuerung jeweils eine DC-Leistungs-Zwischenkreis-Gleichspannungs-Kennlinien für jedes System und/oder den Wechselrichter auf, wobei die DC-Leistungs-Zwischenkreis-Gleichspannungs-Kennlinien voneinander verschieden sind.

Es wird somit insbesondere auch vorgeschlagen, dass die einzelnen Systeme des Elektroenergiesystems durch verschiedene Statiken geregelt werden.

In einer besonders bevorzugten Ausführungsform werden die Statiken durch eine übergelagerte Steuerung dynamisch an den laufenden Betrieb oder an die Eigenschaften des Netzanschlusspunktes und/oder auch den Eigenschaften einer wirtschaftlichen Optimierung angepasst.

Es wird also insbesondere auch vorgeschlagen, dass die Systeme, die am elektrischen Gleichspannungsnetz angeschlossen sind, jeweils mittels einer eigenen DC-Leistungs-Zwischenkreis-Gleichspannungs-Kennlinie gesteuert werden, insbesondere mittels einer eigenen, individuellen Statik gesteuert werden.

In einer besonders bevorzugten Ausführungsform sind die DC-Leistungs-Zwischenkreis-Gleichspannungs-Kennlinien bzw. Statiken der Gestalt, dass die Windenergieanlage(n) bei einem Überschuss elektrischer Leistung im elektrischen Gleichspannungsnetz nach den Photovoltaikanlage(n) abgefahren wird/werden.

Vorzugsweise weist die Kennlinien-Steuerung wenigstens eine der nachstehenden DC-Leistungs-Zwischenkreis-Gleichspannungs-Kennlinie auf:
Eine Windenergieanlagen-Kennlinie, die die elektrische Windenergieanlagen-DC-Leistung in Abhängigkeit der variablen Zwischenkreis-Gleichspannung steuert, insbesondere so, dass die elektrische Windenergieanlagen-DC-Leistung in einem Bereich von einer minimalen Zwischenkreis-Gleichspannung bis zu einem Schwellwert maximal ist und/oder die elektrische Windenergieanlagen-DC-Leistung in einem, insbesondere weiteren, Bereich von einem bzw. dem Schwellwert bis zu einem weiteren Schwellwert, an dem die elektrische Windenergie-anlagen-DC-Leistung Null ist, proportional abnimmt.

Es wird also vorgeschlagen, die Windenergieanlage mittels einer eigenen Statik zu steuern. Diese sieht vor, dass die Windenergieanlage über einen weiten Bereich elektrische Leistung in das elektrische Gleichspannungsnetz einspeist. Sofern das elektrische Gleichspannungsnetz eine zu hohe Gleichspannung aufweist, wird vorgeschlagen die Windenergieanlage zunächst proportional zu drosseln und bei Überschreiten eines weiteren Schwellwertes von dem elektrischen Gleichspannungsnetz zu trennen bzw. die Einspeisung in das elektrische Gleichspannungsnetz zu stoppen.

Eine Photovoltaik-Kennlinie, die die elektrische Photovoltaikanlagen-DC-Leistung in Abhängigkeit der variablen Zwischenkreis-Gleichspannung steuert, insbesondere so, dass die elektrische Photovoltaikanlagen-DC-Leistung in einem Bereich von einer minimalen Zwischenkreis-Gleichspannung bis zu einem Schwellwert maximal ist und/oder die elektrische Photovoltaikanlagen-DC-Leistung in einem, insbesondere weiteren, Bereich von einem bzw. dem Schwellwert bis zu einem weiteren Schwellwert, an dem die elektrische Photovoltaikanlagen-DC-Leistung Null ist, proportional abnimmt.

Es wird also vorgeschlagen, die Photovoltaikanlage mittels einer eigenen Statik zu steuern. Diese sieht vor, dass die Photovoltaikanlage über einen weiten Bereich elektrische Leistung in das elektrische Gleichspannungsnetz einspeist. Sofern das elektrische Gleichspannungsnetz eine zu hohe Gleichspannung aufweist, wird vorgeschlagen die Photovoltaikanlage zunächst proportional zu drosseln und bei Überschreiten eines weiteren Schwellwertes von dem elektrischen Gleichspannungsnetz zu trennen bzw. die Einspeisung in das elektrische Gleichspannungsnetz zu stoppen.

In einer bevorzugten Ausführungsform erfolgt das Drosseln der Einspeisung der Photovoltaikanlage vordem Drosseln der Einspeisung der Windenergieanlage. Es wird also vorgeschlagen, für die Photovoltaikanlage andere, insbesondere niedrigere, Schwellwert zu verwenden.

Eine Wechselrichter-Kennlinie, die den Wechselrichter so steuert, dass der Wechselrichter elektrische Leistung in das elektrische Versorgungsnetz einspeist oder elektrische Leistung aus dem elektrischen Versorgungsnetz entnimmt, insbesondere in Abhängigkeit der variablen Zwischenkreis-Gleichspannung, bevorzugt so, dass der Wechselrichter in einem Bereich von einer minimalen Zwischenkreis-Gleichspannung bis zu einem Schwellwert proportional zunehmend elektrische Leistung aus dem elektrischen Versorgungsnetz entnimmt und/oder der Wechselrichter in einem, insbesondere weiteren, Bereich von einem bzw. dem Schwellwert bis zu einem weiteren Schwellwert weder elektrische Leistung aus dem elektrischen Versorgungsnetz entnimmt noch elektrische Leistung in das elektrische Versorgungsnetz einspeist und/oder der Wechselrichter in einem, insbesondere noch weiteren, Bereich von einem bzw. dem Schwellwert bis zu einem weiteren Schwellwert proportional zunehmend elektrische Leistung in das elektrische Versorgungsnetz einspeist.

Es wird also vorgeschlagen, dass der Wechselrichter bi-direktional in Abhängigkeit der variablem Zwischenkreis-Gleichspannung betrieben wird. Sofern das elektrische Gleichspannungsnetz elektrische Leistung benötigt, wird diese aus dem elektrische Versorgungsnetz entnommen und anders herum.

Eine Chopper-Kennlinie, die die Umwandlungsvorrichtung in Abhängigkeit der variablen Zwischenkreis-Gleichspannung steuert, insbesondere so, dass die Umwandlungsvorrichtung in einem Bereich von einem Schwellwert bis zu einer maximalen Zwischenkreis-Gleichspannung proportional zunehmend elektrische Leistung aus dem elektrischen Gleichspannungsnetz entnimmt.

Eine Speicher-Kennlinie, die einen bzw. den bi-direktionalen, elektrischen Speicher in Abhängigkeit der variablen Zwischenkreis-Gleichspannung steuert, insbesondere so, dass der bi-direktionale, elektrische Speicher in einem Bereich von einem Schwellwert bis zu einem weiteren Schwellwert proportional zunehmend elektrische Leistung in das elektrische Gleichspannungsnetz einspeist und/oder der bi-direktionale, elektrische Speicher in einem, insbesondere weiteren, Bereich von einem bzw. dem Schwellwert bis zu einem weiteren Schwellwert weder elektrische Leistung aus dem elektrischen Gleich-spannungsnetz entnimmt noch elektrische Leistung in das elektrische Gleichspannungsnetz einspeist und/oder der bi-direktionale, elektrische Speicher in einem, insbesondere noch weiteren, Bereich von einem bzw. dem Schwellwert bis zu einem weiteren Schwellwert proportional zunehmend elektrische Leistung aus dem elektrischen Gleichspannungsnetz entnimmt. Eine Last-Kennlinie, die eine bzw. die uni-direktionale Last in Abhängigkeit der variablen Zwischenkreis-Gleichspannung steuert, insbesondere so, dass die uni-direktionale Last in einem Bereich, von einem Schwellwert bis zu einem weiteren Schwellwert, proportional zunehmend elektrische Leistung aus dem elektrischen Gleichspannungsnetz entnimmt.

Vorzugsweise umfasst die Kennlinien-Steuerung wenigstens einen der nachfolgenden Gleichspannungsschwellwerte:
Ein Schwellwert, der eine minimale Zwischenkreis-Gleichspannung kennzeichnet, ab dem das Elektroenergiesystem vom elektrische Versorgungsnetz genommen wird.

Ein Schwellwert, bis zudem das Elektroenergiesystem elektrische Leistung aus dem elektrischen Versorgungsnetz entnimmt.

Ein Schwellwert, ab dem das Elektroenergiesystem elektrische Leistung in das elektrische Versorgungsnetz einspeist.

Ein Schwellwert, ab dem ein bzw. der bi-direktionale, elektrische Speicher elektrisch Leistung aus dem elektrischen Gleichspannungsnetz entnimmt.

Ein Schwellwert, ab dem die Photovoltaikanlage gedrosselt wird.

Ein Schwellwert, ab dem die Windenergieanlage gedrosselt wird.

Ein Schwellwert, ab dem eine bzw. die Umwandlungsvorrichtung eingeschaltet wird, insbesondere um überschüssige, elektrische Leistung aus dem elektrischen Gleichspannungsnetz zu entfernen.

Ein Schwellwert, der eine maximale Zwischenkreis-Gleichspannung kennzeichnet, ab dem das Elektroenergiesystem vom elektrische Versorgungsnetz genommen wird.

Vorzugsweise umfasst das Elektroenergiesystem ferner ein dynamisches Einspeiseund/oder Last- und/oder Speichermanagement, welches insbesondere mit der Kennlinien-Steuerung so interagiert, dass die Zwischenkreis-Gleichspannung innerhalb eines zulässigen Bereiches gehalten wird, bevorzugt zwischen einer maximalen Zwischenkreis-Gleichspannung und einer minimalen Zwischenkreis-Gleichspannung.

Es ist also insbesondere neben der Kennlinien-Steuerung bzw. den Statiken wenigstens eine weitere Steuerung vorgesehen, die das Speichermanagement oder das Lastmanagement oder das Einspeisemanagement umfasst.

Bevorzugt ist das Einspeisemanagement dazu vorgesehen, die eingespeiste elektrische Leistung des Elektroenergiesystems zu stellen, insbesondere zu begrenzen.

In einer besonders bevorzugten Ausführungsform ist das Einspeisemanagement dazu vorgesehen, die eingespeiste elektrische Leistung des Elektroenergiesystems zu begrenzen, wenn ein bzw. der bi-direktionale Speicher einen Energiegehalt aufweist, der kleiner ist als 20 Prozent seines Nenn-Energiegehaltes.

Bevorzugt ist das Lastmanagement dazu vorgesehen, die, durch die uni-direktionale Last aus dem elektrischen Gleichspannungsnetz aufgenommene Leistung zu stellen, insbesondere zu begrenzen.

Bevorzugt ist das Speichermanagement dazu vorgesehen, die, durch den bi-direktionalen Speicher aus dem elektrischen Gleichspannungsnetz aufgenommene Leistung zu stellen, insbesondere zu begrenzen.

In einer bevorzugten Ausführungsform weist das Elektroenergiesystem sowohl ein Speichermanagement als auch ein Lastmanagement als auch ein Einspeisemanagement auf.

Vorzugsweise umfasst das Elektroenergiesystem ferner eine Steuereinheit, insbesondere umfassend ein MPP-Tracker, die dazu eingerichtet ist, in Abhängigkeit eines Arbeitspunktes der Photovoltaikanlage eine AC-Ausgangs-Wechselrichter-Leistung am Wechselrichterausgang einzustellen, die in das elektrische Versorgungsnetz eingespeist wird, insbesondere über einen Transformator.

Es wird also insbesondere auch vorgeschlagen, dass das Elektroenergiesystem eine Steuereinheit aufweist, die dazu eingerichtet ist, die Ausgangsleistung des Wechselrichters einzustellen, also die Leistung, die das Elektroenergiesystem an das elektrische Versorgungsnetz abgibt.

Bevorzugt weist die Steuereinheit hierfür wenigstens einen Maximum Power Point Tracker (kurz: MPP-Tracker) auf.

Besonders bevorzugt interagiert der MPP-Tracker mit der Photovoltaikanlage, insbesondere so, dass in Abhängigkeit eines Arbeitspunktes der Photovoltaikanlage die Ausgangsleistung des Wechselrichters eingestellt wird.

Die Steuereinheit ist also insbesondere dazu eingerichtet, eine übergeordnete Steuerung vorzunehmen.

Besonders bevorzugt umfasst die Steuereinheit zudem ein vorstehend oder nachstehend beschriebenes Last- und/oder Einspeise- und/oder Speichermanagement.

Vorzugsweise ist die DC-Eingangs-Wechselrichter-Nennleistung kleiner als die Summe der Windenergieanlagen-Nennleistung und der Photovoltaikanlagen-Nennleistung, insbesondere kleiner als 80% der Summen, bevorzugt kleiner als 60% der Summe, besonders bevorzugt kleiner als 50% der Summe.

Es wird somit insbesondere auch vorgeschlagen, den Wechselrichter kleiner auszuführen als dies unter Berücksichtigung der Windenergieanlagen- und der Photovoltaikanlagen-Nennleistung üblich wäre.

So würde beispielsweise bei einer Windenergieanlagen-Nennleistung von 5MW, der Wechselrichter auf eben diese 5MW ausgelegt werden. Gleiches wäre in Bezug auf die Photovoltaikanlagen üblich, so dass ein Mischpark aus Windenergie- und Photovoltaikanlagen dann entsprechend eine Nennleistung von 10MW und einen entsprechenden 10MW-Wechselrichter aufweisen würde.

Durch die erfindungsgemäße Zusammenstellung des Elektroenergiesystems bzw. durch die erfindungsgemäße Kennlinien-Steuerung ist es jedoch möglich, den Wechselrichter kleiner auszulegen, bspw. auf 5 MW oder 7,5 MW.

Die vorliegende Erfindung wird nun nachfolgend exemplarisch und anhand von Ausführungsbeispielen unter Bezugnahme auf die begleitenden Figuren näher erläutert, wobei für gleiche oder ähnliche Bauteile gleiche Bezugszeichen verwendet werden. Hierbei zeigen:
- Fig. 1: schematisch und exemplarisch eine perspektivische Ansicht einer Windenergieanlage in einer Ausführungsform,
- Fig. 2: schematisch und exemplarisch einen Aufbau eines erfindungsgemäßen Elektroenergiesystems in einer Ausführungsform, und
- Fig. 3: schematisch und exemplarisch den Aufbau einer Kennlinien-Steuerung in einer Ausführungsform.

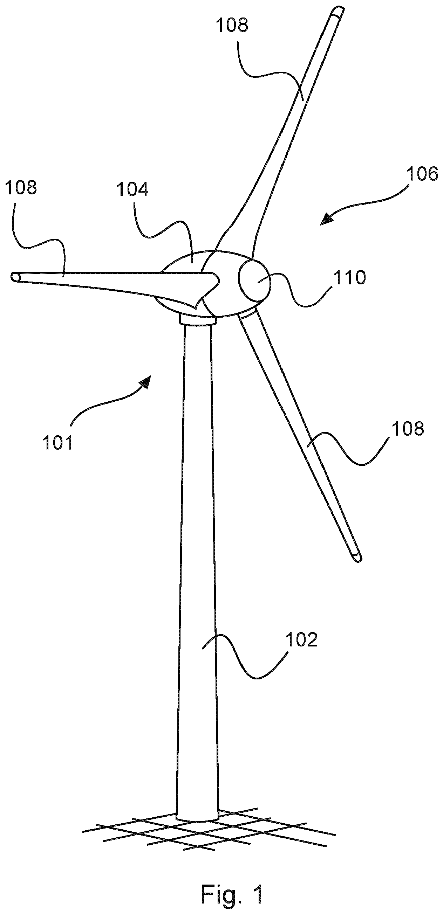

Fig. 1 zeigt eine perspektivische Ansicht einer Windenergieanlage 101.

Die Windenergieanlage 101 weist hierzu einen Turm 102 und eine Gondel 104 auf. An der Gondel 104 ist ein aerodynamischer Rotor 106 mit drei Rotorblättern 108 und einen Spinner angeordnet. Der Rotor wird im Betrieb durch den Wind in eine Drehbewegung versetzt und treibt dadurch einen Generator an der Gondel 104 an. Der Generator erzeugt hierdurch einen Strom, der mittels eines Umrichters in ein elektrisches Gleichspannungsnetz eingespeist wird.

Die Steuerung der Windenergieanlage erfolgt dabei bevorzugt über eine Windenergieanlagen-Kennlinie, wie besonders bevorzugt in Fig. 3 dargestellt.

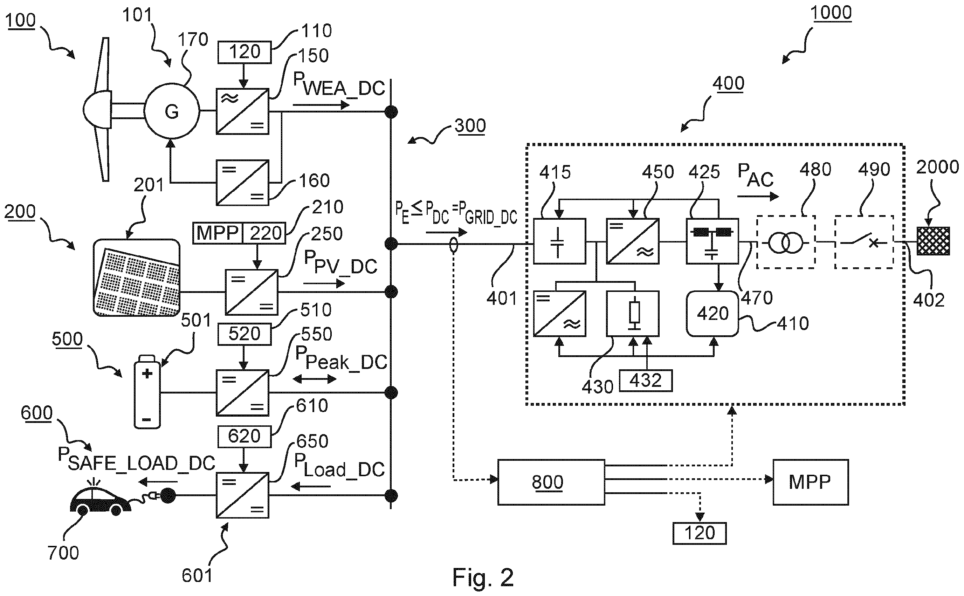

Fig. 2 zeigt einen schematischen Aufbau eines erfindungsgemäßen Elektroenergiesystems 1000 in einer bevorzugten Ausführungsform, umfassend eine Windenergieanlage 101, wie in Fig. 1 gezeigt.

Das Elektroenergiesystem 1000 umfasst ein erstes System 100, ein zweites System 200, ein drittes System 500 und ein viertes System 600, die über ein gemeinsames, elektrisches Gleichspannungsnetz 300 mit einem Wechselrichter 400 verbunden sind, der mit dem elektrischen Versorgungsnetz 2000 verbunden ist.

Zur Steuerung des Elektroenergiesystems 1000 ist eine Steuereinheit 800 sowie eine Kennlinien-Steuerung 700 gemäß Fig. 3 vorgesehen.

Das erste System 100 weist wenigstens eine Windenergieanlage 101 auf, die über einen Gleichrichter 150 mit dem elektrischen Gleichspannungsnetz 300 verbunden ist. Der Gleichrichter 150 wird mittels einer Windenergieanlagensteuereinheit 110 angesteuert, die in Abhängigkeit einer Windenergieanlagen-Kennlinie 120 arbeitet, insbesondere einer Windenergieanlagen-Kennlinie 120 gemäß Figur 3. Der Gleichrichter 150 erzeugt hierdurch eine elektrische Windenergieanlagen-DC-Leistung P_{WEA}__{DC}. Bevorzugt weist die Windenergieanlage zudem einen zweiten Gleichrichter 160 auf, der dazu eingerichtet ist, einen Erregerstrom des Generators 170 der Windenergieanlage einzustellen.

Das zweite System 200 weist wenigstens eine Photovoltaikanlage 201 auf, welche über einen Gleichspannungswandler 250 mit dem elektrischen Gleichspannungsnetz verbunden ist. Der Gleichspannungswandler 250 wird mittels einer Photovoltaikanlagensteuereinheit 210 angesteuert, die in Abhängigkeit einer Photovoltaik-Kennlinie 220 arbeitet, insbesondere einer Photovoltaik-Kennlinie 220 gemäß Figur 3. Der Gleichspannungswandler 250 erzeugt hierdurch eine elektrische elektrischen Photovoltaikanlagen-DC-Leistung P_{PV_DC}. Bevorzugt weist die Photovoltaikanlage zudem einen MPP-Tracker MPP auf, der dazu eingerichtet ist, einen optimalen Arbeitspunkt der Photovoltaikanlage 210 einzustellen, unter dessen Berücksichtigung eine AC-Ausgangs-Wechselrichter-Leistung (PAC) am Wechselrichterausgang (470) eingestellt wird.

Das dritte System 500 weist wenigstens einen bi-direktionalen, elektrischen Speicher 501 auf, welcher über einen Gleichspannungswandler 550 mit dem elektrischen Gleichspannungsnetz 300 verbunden ist. Der Gleichspannungswandler 550 wird mittels einer Speichersteuereinheit 510 angesteuert, die in Abhängigkeit einer Speicher-Kennlinie 520 arbeitet, insbesondere einer Speicher-Kennlinie 120 gemäß Figur 3. Der Gleichspannungswandler 550 ist zudem dazu eingerichtet, insbesondere in Abhängigkeit der Speicher-Kennlinie 620, eine elektrische Speicher-DC-Leistung P_{Peak_DC} aus dem elektrischen Gleichspannungsnetz 300 zu entnehmen und/oder eine elektrische Speicher-DC-Leistung P_{Peak_DC} an das elektrische Gleichspannungsnetz 300 abzugeben.

Das vierte System 600 weist wenigstens eine uni-direktionale, elektrische Last 601 auf, welche über einen Gleichspannungswandler 650 mit dem elektrischen Gleichspannungsnetz verbunden ist. Der Gleichspannungswandler 650 wird mittels einer Laststeuereinheit 610 angesteuert, die in Abhängigkeit einer Last-Kennlinie 620 arbeitet, insbesondere einer Last-Kennlinie 620 gemäß Figur 3. Das vierte System 600 ist also dazu eingerichtet, eine elektrische Lade-Leistung P_{Load_DC} aus dem elektrischen Gleichspannungsnetz 300 aufzunehmen, die aufgenommene Lade-Leistung P_{Load_DC} zu speichern und die gespeicherte, aufgenommene Lade-Leistung P_{Save_Load_DC} bei Bedarf an einen beweglichen elektrischen Speicher 700 abzugeben. Der bewegliche elektrische Speicher 700 ist bspw. die Batterie eines Elektroautos.

Das elektrische Gleichspannungsnetz 300 ist ferner mit dem Wechselrichter 400 verbunden, wobei der Wechselrichter wiederum mit dem elektrischen Versorgungsnetz 2000 verbunden ist. Der Wechselrichter 400 kann somit auch als Einspeiseeinheit verstanden werden.

Hierzu weist der Wechselrichter einen Wechselrichtereingang 401, eine Lade-Kapazität 415 und einen Umrichter 450 auf.

Der Umrichter 450 ist erzeugerseitig über die Lade-Kapazität 415 mit dem elektrischen Gleichspannungsnetz 300 und netzseitig über einen Filter 425 über einen Wechselrichterausgang 470 mit dem elektrischen Versorgungsnetz 2000 verbunden. Optional, können zwischen Wechselrichterausgang 470 und dem elektrischen Versorgungsnetz 2000 noch ein Leistungstransformator 480 und Netzschutzeinrichtungen 490 angeordnet sein.

Bevorzugt weist der Wechselrichter 400 eine Wechselrichtersteuerung 410 auf, die in Abhängigkeit einer Wechselrichter-Kennlinie 420 arbeitet, insbesondere einer Wechselrichter-Kennlinie 420 wie in Fig. 3 gezeigt.

In einer besonders bevorzugten Ausführungsform ist die Wechselrichtersteuerung 410 dazu vorgesehen, die variable Zwischenkreis-Spannung U_{ZK_DC} einzustellen. Es wird also vorgeschlagen, dass die variable Zwischenkreis-Spannung U_{ZK_DC} mittels des Umrichters 450 bzw. des Wechselrichter 400 eingestellt wird.

Zudem weist der Wechselrichter 400 bevorzugt eine Umwandlungsvorrichtung 430 auf, die in Abhängigkeit einer Chopper-Kennlinie 432 gesteuert wird, insbesondere einer Chopper-Kennlinie 432 wie in Fig. 3 gezeigt. Besonders bevorzugt ist die Umwandlungsvorrichtung zwischen Lade-Kapazität 415 und dem Umrichter 450 angeordnet. Die Umwandlungsvorrichtung ist dabei insbesondere dazu eingerichtet, elektrische Energie in Wärme umzuwandeln.

Die Steuerung der Systeme 100, 200, 500, 600 und des Wechselrichters 400 erfolgt dabei in Abhängigkeit der variablen Zwischenkreis-Spannung U_{ZK_DC} des elektrischen Gleichspannungsnetz 300 mittels einer Kennlinien-Steuerung 700 gemäß Fig. 3.

Der Wechselrichter 400 ist also dazu eingerichtet, die von den Systemen 100, 200, 500, 600 erzeugte bzw. an das Gleichspannungsnetz abgegebene Leistung in das elektrische Versorgungsnetz einzuspeisen. Diese erzeugte bzw. an das Gleichspannungsnetz abgegebene Leistung kann auch als im Gleichspannungsnetz befindliche DC-Leistung P_{GRID_DC} bezeichnet werden.

Ferner ist zum Steuern des Elektroenergiesystems 1000 eine Steuereinheit 800 vorgesehen.

Die Steuereinheit ist dabei dazu eingerichtet, in Abhängigkeit eines Arbeitspunktes der Photovoltaikanlage 201 eine AC-Ausgangs-Wechselrichter-Leistung P_{AC} am Wechselrichterausgang 402 einzustellen, die in das elektrische Versorgungsnetz eingespeist wird.

Besonders bevorzugt ist die Steuereinheit 800 der Kennlinie-Steuerung 700, insbesondere wie in Fig. 3 gezeigt, überlagert und dazu eingerichtet, die Gleichspannungs-Schwellwerte und/oder die DC-Leistungs-Zwischenkreis-Gleichspannungs-Kennlinien zu variieren bzw. an Anforderungen am Netzanschlusspunkt dynamisch anzupassen.

In einer weiteren Ausführungsform weist die Steuereinheit zudem ein vorstehend oder nachstehend beschriebenes Last- und/oder Einspeise und/oder Speichermanagement auf.

Die oben erwähnte Kennlinien-Steuerung 700 wird nun nachfolgend anhand von Fig. 3 exemplarisch erläutert.

Fig. 3 zeigt schematisch und exemplarisch eine Kennlinien-Steuerung zur Leistungsaufteilung in einer bevorzugten Ausführungsform, wobei die Steuerung des Elektroenergiesystems im Wesentlichen in Abhängigkeit der Zwischenkreis-Gleichspannung U_{ZK_DC} und der vom elektrischen Gleichspannungsnetz geführten elektrischen Leistung P_{ZK} erfolgt.

Die Kennlinien-Steuerung 700 umfasst hierfür eine Vielzahl von Gleichspannungs-Schwellwerten 710, 720, 730, 740, 750, 760, 765, 770, 775, 780, 790 sowie eine Vielzahl von DC-Leistungs-Zwischenkreis-Gleichspannungs-Kennlinien 120, 220, 420, 432, 520, 620.

Bevorzugt sind die Gleichspannungs-Schwellwerte 710, 720, 730, 740, 750, 760, 765, 770, 775, 780, 790 und die DC-Leistungs-Zwischenkreis-Gleichspannungs-Kennlinien 120, 220, 420, 432, 520, 620 durch eine überlagerte Steuerung beliebig einstellbar.

Die einzelnen DC-Leistungs-Zwischenkreis-Gleichspannungs-Kennlinien 120, 220, 420, 432, 520, 620, die auch als Statiken bezeichnet werden können, werden nun nachfolgend anhand des Koordinatensystems der Fig. 3 näher erläutert, wobei auf der x-Achse des Koordinatensystems die variable Zwischenkreis-Gleichspannung U_{ZK_DC} des elektrischen Gleichspannungsnetzes abgetragen ist, und auf der y-Achse des Koordinatensystems die mit dem elektrischen Gleichspannungsnetz ausgetauschte elektrische Leistung P_{ZK, n}. Der Abtrag der Werte erfolgt dabei im Zählpfeilsystem, so dass die Werte der variablen Zwischenkreis-Spannung U_{ZK_DC} der x-Achse nach rechts zunehmend sind und dass die elektrische Leistung P_{ZK} oberhalb der x-Achse die Leistung angibt, die aus dem elektrischen Gleichspannungsnetz 300 entnommen wird und die elektrische Leistung P_{ZK} unterhalb der x-Achse die Leistung angibt, die an das elektrische Gleichspannungsnetz 300 abgegeben wird.

Die Windenergieanlagen-Kennlinie 120, die die elektrische Windenergieanlagen-DC-Leistung P_{WEA_DC} in Abhängigkeit der variablen Zwischenkreis-Gleichspannung U_{ZK_DC} steuert, weist einen Bereich, von einer minimalen Zwischenkreis-Gleichspannung UMIN bis zu einem Schwellwert 765, auf, in die elektrische Windenergieanlagen-DC-Leistung P_{WEA_DC} maximal ist und einen Bereich, von dem Schwellwert 765 bis zu einem weiteren Schwellwert 775, auf, in dem die elektrische Windenergieanlagen-DC-Leistung P_{WEA_DC} proportional abnimmt, bis die elektrische Windenergieanlagen-DC-Leistung P_{WEA_DC} am weiteren Schwellwert 775 Null ist.

Der Schwellwert 765 ist also ein Schwellwert ab die Windenergieanlage gedrosselt bzw. abgefahren wird.

Die Photovoltaik-Kennlinie 220, die die elektrische Photovoltaik-DC-Leistung P_{PV_DC} in Abhängigkeit der variablen Zwischenkreis-Gleichspannung U_{ZK_DC} steuert, weist einen Bereich, von einer minimalen Zwischenkreis-Gleichspannung U_{MIN} bis zu einem Schwellwert 760, auf, in die elektrische Photovoltaik-DC-Leistung P_{PV_DC} maximal ist und einen Bereich, von dem Schwellwert 760 bis zu einem weiteren Schwellwert 770, auf, in dem die elektrische Photovoltaik-DC-Leistung P_{PV_DC} proportional abnimmt, bis die elektrische Photovoltaik-DC-Leistung P_{PV_DC} am weiteren Schwellwert 770 Null ist.

Der Schwellwert 760 ist also ein Schwellwert ab dem die Photovoltaikanlage gedrosselt bzw. abgefahren wird.

Es wird insbesondere also auch vorgeschlagen, dass, insbesondere gemäß diesen beiden Kennlinien 120, 220, im Falle eines Überangebotes elektrischer Leistung innerhalb des Elektroenergiesystems 1000 zunächst die Photovoltaikanlage 201 abgeregelt und anschließend die Windenergieanlage 101.

Die Wechselrichter-Kennlinie 420 steuert den Wechselrichter 400 in Abhängigkeit der variablen Zwischenkreis-Gleichspannung U_{ZK_DC} so, dass der Wechselrichter 400 elektrische Leistung in das elektrische Versorgungsnetz 2000 einspeist oder elektrische Leistung aus dem elektrischen Versorgungsnetz 2000 entnimmt.

Hierzu weist die Wechselrichter-Kennlinie 420 einen ersten Bereich, von einer minimalen Zwischenkreis-Gleichspannung U_{MIN} bis zu einem Schwellwert 720, auf, in dem die, aus dem elektrischen Versorgungsnetz 2000 entnommene elektrische Leistung proportional zunimmt. Dieser Arbeitsbereich wird insbesondere dann gefahren, wenn das elektrische Gleichspannungsnetz zu wenig Leistung aufweist und/oder der Betreiber des elektrischen Versorgungsnetzes dies wünscht.

Die minimale Zwischenkreis-Gleichspannung U_{MIN} kann auch ein Schwellwert 710 sein, also ein Schwellwert 710, der eine minimale Zwischenkreis-Gleichspannung U_{MIN} kennzeichnet. In einer besonders bevorzugten Ausführungsform wird das Elektroenergiesystem 1000 zudem ab Unterschreiten des Schwellwertes 710 vom elektrischen Versorgungsnetz genommen.

Der Schwellwert 720 ist zudem ein Schwellwert bis zu dem das Elektroenergiesystem 1000 elektrische Leistung aus dem elektrischen Versorgungsnetz 2000 entnimmt.

In einem weiteren Bereich, von dem Schwellwert 720 bis zu einem weiteren Schwellwert 740, wird weder elektrische Leistung aus dem elektrischen Versorgungsnetz 2000 entnimmt noch elektrische Leistung in das elektrische Versorgungsnetz 2000 einspeist. Dieser Arbeitsbereich wird insbesondere dann gefahren, wenn die Windenergieanlagen 101 und die Photovoltaikanlagen 201 ausreichend elektrische Leistung bereitstellen, um die Verbraucher innerhalb des Elektroenergiesystems 1000, also bspw. den elektrischen Speicher, selbst zu versorgen oder der Betreiber des elektrischen Versorgungsnetzes dies wünscht.

In einem noch weiteren Bereich, von dem Schwellwert 740 bis zu einem weiteren Schwellwert 750, nimmt elektrische Leistung, die in das elektrische Versorgungsnetz 2000 einspeist werden soll, proportional zu, insbesondere bis zu einem Maximum, welches dann bis zu einer maximalen Zwischenkreis-Gleichspannung U_{MAX} ansteht. Dieser Bereich ist der eigentliche Einspeisebereich des Elektroenergiesystems, in dem das Elektroenergiesystem elektrische Leistung an das elektrische Versorgungsnetz abgibt.

Der Schwellwert 740 ist also ein Schwellwert ab dem das Elektroenergiesystem elektrische Leistung in das elektrische Versorgungsnetz 2000 einspeist.

Die Chopper-Kennlinie 432, die die Umwandlungsvorrichtung 430 in Abhängigkeit der variablen Zwischenkreis-Gleichspannung U_{ZK_DC} steuert, umfasst einen Bereich, von einem Schwellwert 780 bis zu einer maximalen Zwischenkreis-Gleichspannung U_{MAX}, in dem die Umwandlungsvorrichtung 430 proportional zunehmend elektrische Leistung aus dem elektrischen Gleichspannungsnetz entnimmt.

Der Schwellwert 780 ist also ein Schwellwert ab dem die Umwandlungsvorrichtung 430 eingeschaltet wird, insbesondere um überschüssige, elektrische Leistung aus dem elektrischen Gleichspannungsnetz 300 zu entfernen.

Es wird also insbesondere vorgeschlagen, dass der Chopper erst nach Abfahren der Windenergieanlage 101 und nach Abfahren der Photovoltaikanlage 201 aktiviert wird, insbesondere um überschüssige Leistung aus dem elektrischen Gleichspannungsnetz in Wärme umzuwandeln.

Sollte selbst der Chopper einen weiteren Anstieg der Zwischenkreis-Gleichspannung U_{ZK_DC} nicht verhindern können, so wird ferner vorgeschlagen bei Überschreiten einer maximale Zwischenkreis-Gleichspannung U_{MAX}, welche auch als Schwellwert 790 ausgebildet sein kann, das Elektroenergiesystem 1000 vom elektrischen Versorgungsnetz 2000 zu trennen.

Die Speicher-Kennlinie 520, die den bi-direktionalen, elektrischen Speicher 501 in Abhängigkeit der variablen Zwischenkreis-Gleichspannung U_{ZK_DC} steuert, umfasst im Wesentlichen drei Bereiche.

In einem Bereich, von einer einem Schwellwert 740 bis zu einem weiteren Schwellwert 730 proportional, speist der elektrische Speicher 501 zunehmend elektrische Leistung in das elektrische Gleichspannungsnetz 300 ein.

In einem weiteren Bereich, von dem Schwellwert 740 bis zu einem weiteren Schwellwert 750, speist der elektrische Speicher 501 weder elektrische Leistung in das elektrische Gleichspannungsnetz 300 ein, noch entnimmt elektrische Leistung aus diesem.

In einem noch weiteren Bereich, von dem Schwellwert 750 bis zu einem weiteren Schwellwert 760, entnimmt der Speicher 501 proportional zunehmend elektrische Leistung aus dem elektrischen Gleichspannungsnetz 300, wobei dieser Zustand bis einer maximalen Zwischenkreis-Gleichspannung U_{MAX} anhält.

Der Schwellwert 750 ist also ein Schwellwert ab dem der bi-direktionale, elektrische Speicher 501 elektrische Leistung aus dem elektrischen Gleichspannungsnetz 300 entnimmt.

Der bi-direktionalen, elektrischen Speicher 501 ist also dazu vorgesehen, das elektrische Gleichspannungsnetz 300 mittels Leistungseinspeisung und Leistungsentnahme zu stützen.

Der Speicher entnimmt dem elektrischen Gleichspannungsnetz immer dann elektrische Leistung, wenn ein vorbestimmter Schwellwert überschritten ist und speist immer dann elektrische Leistung in das elektrische Gleichspannungsnetz ein, wenn ein anderer vorbestimmter Schwellwert überschritten ist.

Die Last-Kennlinie 620, die die uni-direktionale Last 601 in Abhängigkeit der variablen Zwischenkreis-Gleichspannung (UZK_DC) steuert, umfasst einem Bereich, von einem Schwellwert 730 bis zu einem weiteren Schwellwert 720, in dem die uni-direktionale Last 601 elektrische Leistung proportional zunehmend aus dem elektrischen Gleichspannungsnetz 300 entnimmt.

Es wird also insbesondere vorgeschlagen, dass die Systeme 100, 200, 500, 600 des Elektroenergiesystems 1000 in Abhängigkeit der Zwischenkreis-Gleichspannung U_{ZK_DC} gesteuert werden, insbesondere mittels Statiken also den vorstehend oder nachstehend beschriebenen DC-Leistungs-Zwischenkreis-Gleichspannungs-Kennlinien.

Ein solches Vorgehen hat insbesondere den Vorteil, dass kein schnelles Lastenmanagement nötig ist, um den Wechselrichter, insbesondere den netzseitigen Umrichter, vor einer Überlast zu schützen, bzw. den Zwischenkreis, insbesondere das elektrische Gleichspannungsnetz, vor einer Überladung zu schützen.

Die Erfindung ermöglicht nämlich, auch ohne eine übergeordnete Steuerung, stabile Arbeitspunkte für die jeweiligen Systeme bzw. einen stabilen Arbeitspunkt für das Elektroenergiesystem.

In einer bevorzugten Ausführungsform ist ferner aber eine übergeordnete Steuerung, beispielsweise in Form einer Steuereinheit, wie oben beschrieben, vorgesehen, welche dazu eingerichtet ist, wenigstens die Arbeitspunkte bzw. die Schwellwerte und Statiken entsprechend individuell einzustellen.

Ferner kann die übergeordnete Steuerung verschiebbare bzw. variable Begrenzungen vorsehen, um beispielsweise ein Speichermanagement 830 oder ein Lastmanagement 820 zu betreiben oder die Netzanschlussleistung mittels eines Einspeisemanagements 810 zu limitieren.

Das Speicher- und/oder Last- und/oder Einspeisemanagement stellen somit aktive Begrenzungen vor, die in die Kennlinien-Steuerung eingreifen, beispielsweise um die Netzanschlussleistung am Netzanschlusspunkt des Elektroenergiesystems zu emittieren.

Dies ist beispielsweise dann besonders vorteilhaft, wenn das elektrische Versorgungsnetz bereits ein Überangebot an elektrischer Leistung aufweist. In solchen Fällen stellt das Zurückhalten erzeugter elektrischer Leistung eine Systemdienstleistung dar, welche einem stabilen Netzbetrieb des Versorgungsnetzes entgegenkommt.

Diese so zurückgehaltene Leistung kann dann ebenfalls, wie beispielsweise oben beschrieben, einem elektrischen Speicher zugeführt werden oder einer elektrischen Ladestation für PKWs zu Verfügung gestellt werden.

## Patentansprüche

1. Elektroenergiesystem (1000) wenigstens umfassend:
- ein elektrischen Gleichspannungsnetz (300) mit einer variablen Zwischenkreis-Gleichspannung (U_{ZK_DC})
- einen Wechselrichter (400), der
- über einen Wechselrichter-DC-Eingang (401) mit einer DC-Eingangs-Wechselrichter-Nennleistung (P_{DC}) mit dem elektrischen Gleichspannungsnetz (300) verbunden ist und
- über einen Wechselrichter-AC-Ausgang (470) mit einer AC-Ausgangs-Wechselrichter-Nennleistung (P_{AC}) mit einem dreiphasigen, elektrischen Versorgungsnetz (2000) verbunden ist, welches eine Wechselspannung (U-) aufweist, wobei
- der Wechselrichter Leistungselektronik (410, ..., 490) aufweist, die dazu eingerichtet ist, eine im elektrischen Gleichspannungsnetz befindliche DC-Leistung (P_{GRID_DC}) in das dreiphasige, elektrische Versorgungsnetz (2000) einzuspeisen,
und
- eine Kennlinien-Steuerung (700) zur Leistungsaufteilung umfassend eine Vielzahl von Gleichspannungs-Schwellwerten (760, 765, 770, 775) und eine Vielzahl von DC-Leistungs-Zwischenkreis-Gleichspannungs-Kennlinien (120, 220) mittels derer Systeme gesteuert werden, insbesondere individuell gesteuert werden, die mit dem elektrischen Gleichspannungsnetz (300) verbunden sindferner umfassend:
- ein erstes System (100), wenigstens aufweisend eine Windenergieanlage (101) mit einer Windenergieanlagen-Nennleistung (P_{WEA_Nenn}) zum Erzeugen einer elektrischen Windenergieanlagen-DC-Leistung (P_{WEA_DC}), die mit dem elektrischen Gleichspannungsnetz (300) verbunden ist und
- ein zweites System (200), wenigstens aufweisend eine Photovoltaikanlage (201) mit einer Photovoltaikanlagen-Nennleistung (PPV_Nenn) zum Erzeugen einer elektrischen Photovoltaikanlagen-DC-Leistung (PPV_DC), die mit dem elektrischen Gleichspannungsnetz (300) verbunden ist und
- ein drittes System (500), wenigstens aufweisend einen bi-direktionalen, elektrischen Speicher (501), der mit dem elektrischen Gleichspannungsnetz (300) verbunden und dazu eingerichtet ist,
- eine elektrische Speicher-DC-Leistung (P_{Peak_DC}) aus dem elektrischen Gleichspannungsnetz (300) aufzunehmen, wenn die Summe aus elektrischer Windenergieanlagen-DC-Leistung (P_{WEA_DC}) und elektrischer Photovoltaikanlagen-DC-Leistung (P_{PV_DC}) größer ist als die DC-Eingangs-Wechselrichter-Nennleistung (P_{DC}) und
- eine elektrische Speicher-Leistung (P_{Peak_DC}) an das elektrische Gleichspannungsnetz (300) abzugeben, wenn die Summe aus elektrischer Windenergieanlagen-DC-Leistung (P_{WEA_DC}) und elektrischer Photovoltaikanlagen-DC-Leistung (P_{PV_DC}) kleiner ist als die DC-Eingangs-Wechselrichter-Nennleistung (P_{DC}).

2. Elektroenergiesystem (1000) nach einem der vorstehenden Ansprüche, ferner umfassend:
- ein viertes System (600), wenigstens aufweisend eine uni-direktionale, elektrische Last (601), die mit dem elektrischen Gleichspannungsnetz (300) verbunden und dazu eingerichtet ist,
- eine elektrische Lade-Leistung (P_{Load_DC}) aus dem elektrischen Gleichspannungsnetz (300) aufzunehmen, wenn die Summe aus elektrischer Windenergieanlagen-DC-Leistung (P_{WEA_DC}) und elektrischer Photovoltaikanlagen-DC-Leistung (P_{PV_DC}) größer ist als die DC-Eingangs-Wechselrichter-Nennleistung (P_{DC}),
- die aufgenommene Lade-Leistung (P_{Load_DC}) zu speichern und
- die gespeicherte, aufgenommene Lade-Leistung (P_{Save_Load_DC}) bei Bedarf abzugeben, insbesondere an einen beweglichen elektrischen Speicher (700).

3. Elektroenergiesystem (1000) nach einem der vorstehenden Ansprüche, ferner umfassend:
- ein fünftes System, wenigstens aufweisend eine Umwandlungsvorrichtung (430), insbesondere eine Chopper-Steuerung und/oder einen Chopper-Widerstand, die mit dem elektrischen Gleichspannungsnetz (300) verbunden und dazu eingerichtet ist, elektrische Energie in Wärme umzuwandeln, wenn die Summe aus elektrischer Windenergieanlagen-DC-Leistung (P_{WEA_DC}) und elektrischer Photovoltaikanlagen-DC-Leistung (P_{PV_DC}) größer ist als die DC-Eingangs-Wechselrichter-Nennleistung (P_{DC}).

4. Elektroenergiesystem (1000) nach einem der vorstehenden Ansprüche, wobei
- die Kennlinien-Steuerung (700) jeweils eine DC-Leistungs-Zwischenkreis-Gleichspannungs-Kennlinien (120, 220, 420, 432, 520, 620) für jedes System und/oder den Wechselrichter aufweist, wobei die DC-Leistungs-Zwischenkreis-Gleichspannungs-Kennlinien (120, 220, 420, 432, 520, 620) voneinander verschieden sind.

5. Elektroenergiesystem (1000) nach einem der vorstehenden Ansprüche, wobei
- die Kennlinien-Steuerung (700) wenigstens eine DC-Leistungs-Zwischenkreis-Gleichspannungs-Kennlinie der nachfolgenden Liste aufweist, umfassend:
- eine Windenergieanlagen-Kennlinie (120), die die elektrische Windenergieanlagen-DC-Leistung (P_{WEA_DC}) in Abhängigkeit der variablen Zwischenkreis-Gleichspannung (U_{ZK_DC}) steuert, insbesondere so, dass
- die elektrische Windenergieanlagen-DC-Leistung (P_{WEA_DC}) in einem Bereich von einer minimalen Zwischenkreis-Gleichspannung (U_{MIN}) bis zu einem Schwellwert (765) maximal ist und/oder
- die elektrische Windenergieanlagen-DC-Leistung (PWEA_DC) in einem, insbesondere weiteren, Bereich von einem bzw. dem Schwellwert (765) bis zu einem weiteren Schwellwert (770), an dem die elektrische Windenergieanlagen-DC-Leistung (P_{WEA_DC}) Null ist, proportional abnimmt;
- eine Photovoltaik-Kennlinie (220), die die elektrische Photovoltaikanlagen-DC-Leistung (P_{PV_DC}) in Abhängigkeit der variablen Zwischenkreis-Gleichspannung (U_{ZK_DC}) steuert, insbesondere so, dass
- die elektrische Photovoltaikanlagen-DC-Leistung (P_{PV_DC}) in einem Bereich von einer minimalen Zwischenkreis-Gleichspannung (U_{MIN}) bis zu einem Schwellwert (760) maximal ist und/oder
- die elektrische Photovoltaikanlagen-DC-Leistung (P_{PV_DC}) in einem, insbesondere weiteren, Bereich von einem bzw. dem Schwellwert (760) bis zu einem weiteren Schwellwert (765), an dem die elektrische Photovoltaikanlagen-DC-Leistung (P_{PV_DC}) Null ist, proportional abnimmt;
- eine Wechselrichter-Kennlinie (420), die den Wechselrichter (400) so steuert, dass der Wechselrichter (400) elektrische Leistung in das elektrische Versorgungsnetz (2000) einspeist oder elektrische Leistung aus dem elektrischen Versorgungsnetz (2000) entnimmt, insbesondere in Abhängigkeit der variablen Zwischenkreis-Gleichspannung (U_{ZK_DC}), bevorzugt so, dass
- der Wechselrichter (400) in einem Bereich von einer minimalen Zwischenkreis-Gleichspannung (U_{MIN}) bis zu einem Schwellwert (720) proportional zunehmend elektrische Leistung aus dem elektrischen Versorgungsnetz (2000) entnimmt und/oder
- der Wechselrichter (400) in einem, insbesondere weiteren, Bereich von einem bzw. dem Schwellwert (720) bis zu einem weiteren Schwellwert (740) weder elektrische Leistung aus dem elektrischen Versorgungsnetz (2000) entnimmt noch elektrische Leistung in das elektrische Versorgungsnetz (2000) einspeist und/oder
- der Wechselrichter (400) in einem, insbesondere noch weiteren, Bereich von einem bzw. dem Schwellwert (740) bis zu einem weiteren Schwellwert (750) proportional zunehmend elektrische Leistung in das elektrische Versorgungsnetz (2000) einspeist;
- eine Chopper-Kennlinie (432), die eine bzw. die Umwandlungsvorrichtung (430) in Abhängigkeit der variablen Zwischenkreis-Gleichspannung (U_{ZK_DC}) steuert, insbesondere so, dass
- die Umwandlungsvorrichtung (430) in einem Bereich von einem Schwellwert (780) bis zu einer maximalen Zwischenkreis-Gleichspannung (UMAX) proportional zunehmend elektrische Leistung aus dem elektrischen Gleichspannungsnetz (300) entnimmt;
- eine Speicher-Kennlinie (520), die einen bzw. den bi-direktionalen, elektrischen Speicher (501) in Abhängigkeit der variablen Zwischenkreis-Gleichspannung (U_{ZK_DC}) steuert, insbesondere so, dass
- der bi-direktionale, elektrische Speicher (501) in einem Bereich von einem Schwellwert (740) bis zu einem weiteren Schwellwert (730) proportional zunehmend elektrische Leistung in das elektrische Gleichspannungsnetz (300) einspeist und/oder
- der bi-direktionale, elektrische Speicher (501) in einem, insbesondere weiteren, Bereich von einem bzw. dem Schwellwert (740) bis zu einem weiteren Schwellwert (750) weder elektrische Leistung aus dem elektrischen Gleichspannungsnetz (300) entnimmt noch elektrische Leistung in das elektrische Gleichspannungsnetz (300) einspeist und/oder
- der bi-direktionale, elektrische Speicher (501) in einem, insbesondere noch weiteren, Bereich von einem bzw. dem Schwellwert (750) bis zu einem weiteren Schwellwert (760) proportional zunehmend elektrische Leistung aus dem elektrischen Gleichspannungsnetz (300) entnimmt;
- eine Last-Kennlinie (620), die eine bzw. die uni-direktionale Last (601) in Abhängigkeit der variablen Zwischenkreis-Gleichspannung (U_{ZK_DC}) steuert, insbesondere so, dass
- die uni-direktionale Last (601) in einem Bereich von einem Schwellwert (730) bis zu einem weiteren Schwellwert (720) proportional zunehmend elektrische Leistung aus dem elektrischen Gleichspannungsnetz (300) entnimmt.

6. Elektroenergiesystem (1000) nach einem der vorstehenden Ansprüche, wobei
- die Kennlinien-Steuerung (700) wenigstens einen Gleichspannungs-Schwellwert der nachfolgenden Liste aufweist, umfassend:
- einen Schwellwert (710), der eine minimale Zwischenkreis-Gleichspannung (U_{MIN}) kennzeichnet, ab dem das Elektroenergiesystem vom elektrische Versorgungsnetz genommen wird;
- einen Schwellwert (720), bis zudem das Elektroenergiesystem elektrische Leistung aus dem elektrischen Versorgungsnetz (2000) entnimmt;
- einen Schwellwert (740), ab dem das Elektroenergiesystem elektrische Leistung in das elektrische Versorgungsnetz (2000) einspeist;
- einen Schwellwert (750), ab dem ein bzw. der bi-direktionale, elektrische Speicher (501) elektrische Leistung aus dem elektrischen Gleichspannungsnetz (300) entnimmt;
- einen Schwellwert (760), ab dem die Photovoltaikanlage gedrosselt wird;
- einen Schwellwert (765), ab dem die Windenergieanlage gedrosselt wird;
- einen Schwellwert (780), ab dem eine bzw. die Umwandlungsvorrichtung (430) eingeschaltet wird, insbesondere um überschüssige, elektrische Leistung aus dem elektrischen Gleichspannungsnetz (300) zu entfernen;
- einen Schwellwert (790), der eine maximale Zwischenkreis-Gleichspannung (U_{MAX}) kennzeichnet, ab dem das Elektroenergiesystem vom elektrische Versorgungsnetz genommen wird.

7. Elektroenergiesystem (1000) nach einem der vorstehenden Ansprüche, ferner umfassend
- ein dynamisches Einspeise- (810) und/oder Lasten- (820) und/oder Speichermanagement (830), welches insbesondere mit der Kennlinien-Steuerung (700) so interagiert, dass die Zwischenkreis-Gleichspannung (U_{ZK_DC}) innerhalb eines zulässigen Bereiches gehalten wird, bevorzugt zwischen einer minimalen Zwischenkreis-Gleichspannung (UMIN) und einer maximalen Zwischenkreis-Gleichspannung (UMAX).

8. Elektroenergiesystem (1000) nach einem der vorstehenden Ansprüche, ferner umfassend
- eine Steuereinheit (800), insbesondere umfassend einen MPP-Tracker (220), die dazu eingerichtet ist, in Abhängigkeit eines Arbeitspunktes der Photovoltaikanlage (200) eine AC-Ausgangs-Wechselrichter-Leistung (P_{AC}) am Wechselrichterausgang (470) einzustellen, die in das elektrische Versorgungsnetz (2000) eingespeist wird, insbesondere über einen Transformator (480).

9. Elektroenergiesystem (1000) nach einem der vorstehenden Ansprüche, wobei
- die DC-Einangs-Wechselrichter-Nennleistung (P_{DC}) kleiner ist als die Summe der Windenergieanlagen-Nennleistung (P_{WEA_Nenn}) und der Photovoltaikanlagen-Nennleistung (P_{PV_Nenn}), insbesondere kleiner als 80 Prozent der Summe, bevorzugt kleiner als 60 Prozent der Summe, besonders bevorzugt kleiner als 50 Prozent der Summe.

## Claims

1. Electrical energy system (1000) at least comprising:
- an electrical direct-current voltage network (300) having a variable intermediate circuit direct-current voltage (U_{ZK_DC}),
- an inverter (400) which
- is connected to the electrical direct-current voltage network (300) by means of an inverter DC input (401) having a DC input inverter nominal power (P_{DC}) and
- which is connected by means of an inverter AC output (470) having an AC output inverter nominal power (P_{AC}) to a three-phase electrical power supply network (2000) which has an alternating-current voltage (U-), wherein,
- the inverter has an electronic power system (410,..., 490) which is configured to feed a DC power (P_{GRID-DC}) which is located in the electrical direct-current voltage network into the three-phase electrical power supply network (2000),
and
- a characteristic line control (700) for power division comprising a large number of direct-current voltage threshold values (760, 765, 770, 775) and a large number of DC power intermediate circuit direct-current voltage characteristic lines (120, 220) by means of which systems which are connected to the electrical direct-current voltage network (300) are controlled, in particular individually controlled, further comprising:
- a first system (100) at least having a wind turbine (101) having a wind turbine nominal power (P_{WEA_Nenn}) for producing an electrical wind turbine DC power (P_{WEA_DC}) which is connected to the electrical direct-current voltage network (300) and
- a second system (200) at least having a photovoltaic system (201) having a photovoltaic system nominal power (P_{PV_Nenn}) for producing an electrical photovoltaic DC power (P_{PV_DC}) which is connected to the electrical direct-current voltage network (300), and
- a third system (500) at least having a bi-directional, electrical store (501) which is connected to the electrical direct-current voltage network (300) and which is configured,
- to receive an electrical store DC power (P_{Peak_DC}) from the electrical direct-current voltage network (300) when the sum of the electrical wind turbine DC power (P_{WEA_DC}) and electrical photovoltaic system DC power (P_{PV_DC}) is greater than the DC input inverter nominal power (P_{DC}), and
- to discharge an electrical store power (P_{Peak_DC}) to the electrical direct-current voltage network (300) when the sum of the electrical wind turbine DC power (P_{WEA_DC}) and electrical photovoltaic system DC power (P_{PV_DC}) is less than the DC input inverter nominal power (P_{DC}).

2. Electrical energy system (1000) according to any one of the preceding claims, further comprising:
- a fourth system (600) at least having a unidirectional, electrical load (601) which is connected to the electrical direct-current voltage network (300) and which is configured to
- absorb an electrical load power (P_{Load-DC}) from the electrical direct-current voltage network (300) when the sum of the electrical wind turbine DC power (P_{WEA_DC}) and electrical photovoltaic system DC power (P_{PV_DC}) is greater than the DC input inverter nominal power (P_{DC}),
- to store the absorbed load power (P_{Load_DC}) and
- to discharge the stored absorbed load power (P_{Save_Load_DC}) as required, in particular to a movable electrical store (700).

3. Electrical energy system (1000) according to any one of the preceding claims, further comprising:
- a fifth system, at least having a converter apparatus (430), in particular a chopper control and/or a chopper resistor, which is connected to the electrical direct-current voltage network (300) and which is configured to convert electrical energy into heat when the sum of the electrical wind turbine DC power (P_{WEA_DC}) and electrical photovoltaic system DC power (P_{PV_DC}) is greater than the DC input inverter nominal power (P_{DC}) .

4. Electrical energy system (1000) according to any one of the preceding claims, wherein:
- the characteristic line control (700) has in each case a DC power intermediate circuit direct-current voltage characteristic line (120, 220, 420, 432, 520, 620) for each system and/or the inverter, wherein the DC power intermediate circuit direct-current voltage characteristic lines (120, 220, 420, 432, 520, 620) differ from each other.

5. Electrical energy system (1000) according to any one of the preceding claims, wherein:
- the characteristic line control (700) has at least one DC power intermediate circuit direct-current voltage characteristic line of the following list, comprising:
- a wind turbine characteristic line (120) which controls the electrical wind turbine DC power (P_{WEA_DC}) in accordance with the variable intermediate circuit direct-current voltage (U_{ZK_DC}), in particular in such a manner that
- the electrical wind turbine DC power (P_{WEA_DC}) is at a maximum in a range from a minimum intermediate circuit direct-current voltage (U_{MIN}) to a threshold value (765) and/or
- the electrical wind turbine DC power (P_{WEA_DC}) decreases proportionally in an in particular wider range from a or the threshold value (765) to another threshold value (770) at which the electrical wind turbine DC power (P_{WEA_DC}) is zero;
- a photovoltaic characteristic line (220) which controls the electrical photovoltaic system DC power (P_{PV_DC}) in accordance with the variable intermediate circuit direct-current voltage (U_{ZK_DC}), in particular in such a manner that
- the electrical photovoltaic system DC power (P_{PV_DC}) is at a maximum in a range from a minimum intermediate circuit direct-current voltage (U_{MIN}) to a threshold value (760) and/or
- the electrical photovoltaic system DC power (P_{PV_DC}) decreases proportionally in an in particular wider range from a or the threshold value (760) to another threshold value (765) at which the electrical photovoltaic system DC power (P_{PV_DC}) is zero;
- an inverter characteristic line (420) which controls the inverter (400) in such a manner that the inverter (400) feeds electrical power into the electrical power supply network (2000) or removes electrical power from the electrical power supply network (2000), in particular in accordance with the variable intermediate circuit direct-current voltage (U_{ZK_DC}), preferably in such a manner that
- the inverter (400) in a range from a minimum intermediate circuit direct-current voltage (U_{MIN}) to a threshold value (720) removes electrical power from the electrical power supply network (2000) in a proportionally increasing manner and/or
- the inverter (400) in an in particular wider range from a or the threshold value (720) to another threshold value (740) neither removes electrical power from the electrical power supply network (2000) nor feeds electrical power into the electrical power supply network (2000) and/or
- the inverter (400) in an in particular even wider range from a or the threshold value (740) to another threshold value (750) feeds electrical power into the electrical power supply network (2000) in a proportionally increasing manner;
- a chopper characteristic line (432) which controls a or the converter apparatus (430) in accordance with the variable intermediate circuit direct-current voltage (U_{ZK_DC}), preferably in such a manner that
- the converter apparatus (430) in a range from a threshold value (780) to a maximum intermediate circuit direct-current voltage (U_{MAX}) removes electrical power from the electrical direct-current voltage network (300) in a proportionally increasing manner;
- a store characteristic line (520) which controls a or the bidirectional electrical store (501) in accordance with the variable intermediate circuit direct-current voltage (U_{ZK_DC}), in particular in such a manner that
- the bidirectional electrical store (501) in a range from a threshold value (740) to another threshold value (730) feeds electrical power into the electrical direct-current voltage network (300) in a proportionally increasing manner and/or
- the bidirectional electrical store (501) in an in particular wider range from a or the threshold value (740) to another threshold value (750) neither removes electrical power from the electrical direct-current voltage network (300) nor feeds electrical power into the direct-current voltage network (300) and/or
- the bidirectional electrical store (501) in an in particular even wider range from a or the threshold value (750) to another threshold value (760) removes electrical power from the electrical direct-current voltage network (300) in a proportionally increasing manner;
- a load characteristic line (620) which controls a or the unidirectional load (601) in accordance with the variable intermediate circuit direct-current voltage (U_{ZK_DC}), in particular in such a manner that
- the unidirectional load (601) in a range from a threshold value (730) to another threshold value (720) removes electrical power from the electrical direct-current voltage network (300) in a proportionally increasing manner.

6. Electrical energy system (1000) according to any one of the preceding claims, wherein:
- the characteristic line control (700) has at least one direct-current voltage threshold value of the following list, comprising:
- a threshold value (710) which characterises a minimum intermediate circuit direct-current voltage (U_{MIN}) from which the electrical energy system is taken from the electrical power supply network;
- a threshold value (720), up to which the electrical energy system removes electrical power from the electrical power supply network (2000);
- a threshold value (740) from which the electrical energy system feeds electrical power into the electrical power supply network (2000);
- a threshold value (750), from which a or the bidirectional, electrical store (501) removes electrical power from the electrical direct-current voltage network (300);
- a threshold value (760) from which the photovoltaic system is throttled;
- a threshold value (765) from which the wind turbine is throttled;
- a threshold value (780) from which a or the converter apparatus (430) is switched on, in particular in order to remove excess electrical power from the electrical direct-current voltage network (300);
- a threshold value (790) which identifies a maximum intermediate circuit direct-current voltage (U_{MAX}) from which the electrical energy system is taken from the electrical power supply network.

7. Electrical energy system (1000) according to any one of the preceding claims, further comprising
- a dynamic feeding (810) and/or load (820) and/or storage management (830) which interacts in particular with the characteristic line control (700) in such a manner that the intermediate circuit direct-current voltage (U_{ZK_DC}) is kept within a permissible range, preferably between a minimum intermediate circuit direct-current voltage (U_{MIN}) and a maximum intermediate circuit direct-current voltage (U_{MAX}).

8. Electrical energy system (1000) according to any one of the preceding claims, further comprising
- a control unit (800), in particular comprising an MPP tracker (220) which is configured, depending on a working point of the photovoltaic system (200), to adjust at the inverter output (470) an AC output inverter power (P_{AC}) which is fed into the electrical power supply network (2000), in particular via a transformer (480).

9. Electrical energy system (1000) according to any one of the preceding claims, wherein
- the DC input inverter nominal power (P_{DC}) is less than the sum of the wind turbine nominal power (P_{WEA_Nenn}) and the photovoltaic system nominal power (P_{PV_Nenn}) , in particular less than 80 percent of the sum, preferably less than 60 percent of the sum, in a particularly preferred manner less than 50 percent of the sum.

## Revendications

1. Système d'énergie électrique (1000) comprenant au moins :
- un réseau de tension continue électrique (300) avec une tension continue de circuit intermédiaire variable (U_{ZK_DC})
- un onduleur (400), qui
- est relié, par l'intermédiaire d'une entrée DC d'onduleur (401) avec une tension nominale d'onduleur d'entrée DC (P_{DC}), au réseau de tension continue électrique (300) et
- est relié, par l'intermédiaire d'une sortie AC d'onduleur (470) avec une tension nominale d'onduleur de sortie AC (P_{AC}), à un réseau d'alimentation électrique triphasé (2000), lequel présente une tension alternative (U~), dans lequel
- l'onduleur présente une électronique de puissance (410, ..., 490) qui est mise au point pour injecter une puissance DC (P_{GRID_DC}) se trouvant dans le réseau de tension continue électrique, dans le réseau d'alimentation électrique triphasé (2000),
et
- une commande de courbes caractéristiques (700) pour diviser la puissance, comprenant une pluralité de valeurs de seuil de tension continue (760, 765, 770, 775) et une pluralité de courbes caractéristiques de tension continue de circuit intermédiaire de puissance DC (120, 220), au moyen desquelles des systèmes sont commandés, en particulier sont commandés individuellement, qui sont reliés au réseau de tension continue électrique (300), comprenant en outre :
- un premier système (100), présentant au moins une éolienne (101) avec une puissance nominale d'éolienne (P_{WEA-Nenn}) pour produire une puissance DC d'éolienne électrique (P_{WEA-DC}), qui est reliée au réseau de tension continue électrique (300), et
- un deuxième système (200), présentant au moins une installation photovoltaïque (201) avec une puissance nominale d'installation photovoltaïque (P_{PV-Nenn}) pour produire une puissance DC d'installation photovoltaïque électrique (P_{PV_DC}), qui est reliée au réseau de tension continue électrique (300), et
- un troisième système (500), présentant au moins un accumulateur électrique bidirectionnel (501), qui est relié au réseau de tension continue électrique (300) et est mis au point
- pour recevoir une puissance DC d'accumulateur électrique (P_{Peak-DC}) provenant du réseau de tension continue électrique (300) quand la somme de la puissance DC d'éolienne électrique (P_{WEA_DC}) et de la puissance DC d'installation photovoltaïque électrique (P_{PV_DC}) est supérieure à la puissance nominale d'onduleur d'entrée DC (P_{DC}) , et
- pour distribuer une puissance d'accumulateur électrique (P_{Peak_DC}) au réseau de tension continue électrique (300) quand la somme de la puissance DC d'éolienne électrique (P_{WEA_DC}) et la puissance DC d'installation photovoltaïque électrique (P_{PV_DC}) est inférieure à la puissance nominale d'onduleur d'entrée DC (P_{DC}) .

2. Système d'énergie électrique (1000) selon l'une quelconque des revendications précédentes, comprenant en outre :
- un quatrième système (600), présentant au moins une charge électrique unidirectionnelle (601), qui est reliée au réseau de tension continue électrique (300) et est mise au point
- - pour recevoir une puissance de charge électrique (P_{Load_Dc}) provenant du réseau de tension continue électrique (300) quand la somme de la puissance DC d'éolienne électrique (P_{WEA_DC}) et de la puissance DC d'installation photovoltaïque électrique (P_{PV_DC}) est supérieure à la puissance nominale d'onduleur d'entrée DC (P_{DC}),
- - pour stocker une puissance de charge reçue (P_{Load_DC}), et
- - pour distribuer au besoin la puissance de charge reçue stockée (P_{Save_Load_DC}) , en particulier à un accumulateur électrique mobile (700).

3. Système d'énergie électrique (1000) selon l'une quelconque des revendications précédentes, comprenant en outre :
- un cinquième système, présentant au moins un dispositif de conversion (430), en particulier une commande de hacheur et/ou une résistance de hacheur, qui est reliée au réseau de tension continue électrique (300) et est mise au point pour convertir de l'énergie électrique en chaleur quand la somme de la puissance DC d'éolienne électrique (P_{WEA_DC}) et de la puissance DC d'installation photovoltaïque électrique (P_{PV_DC}) est supérieure à la puissance nominale d'onduleur d'entrée DC (P_{DC}) .

4. Système d'énergie électrique (1000) selon l'une quelconque des revendications précédentes, dans lequel
- la commande de lignes caractéristiques (700) présente respectivement des courbes caractéristiques de tension continue de circuit intermédiaire de puissance DC (120, 220, 420, 432, 520, 620) pour chaque système et/ou pour l'onduleur, dans lequel les courbes caractéristiques de tension continue de circuit intermédiaire de puissance DC (120, 220, 420, 432, 520, 620) sont différentes les unes des autres.

5. Système d'énergie électrique (1000) selon l'une quelconque des revendications précédentes, dans lequel
- la commande de courbes caractéristiques (700) présente au moins une courbe caractéristique de tension continue de circuit intermédiaire de puissance DC de la liste qui suit, comprenant :
- - une courbe caractéristique d'éolienne (120), qui commande la puissance DC d'éolienne électrique (P_{WEA_DC}) en fonction de la tension continue de circuit intermédiaire variable (U_{ZK_DC}), en particulier de telle sorte que
- - - la puissance DC d'éolienne électrique (P_{WEA_DC}) est maximale dans une plage allant d'une tension continue de circuit intermédiaire minimale (U_{MIN}) à une valeur de seuil (765) et/ou
- - - la puissance DC d'éolienne électrique (P_{WEA_DC}) descend proportionnellement dans une plage, en particulier plus large, allant d'une ou de la valeur de seuil (765) à une autre valeur de seuil (770), à laquelle la puissance DC d'éolienne électrique (P_{WEA_DC}) est nulle ;
- - une courbe caractéristique photovoltaïque (220), qui commande la puissance DC d'installation photovoltaïque électrique (P_{PV_DC}) en fonction de la tension continue de circuit intermédiaire variable (U_{ZK_DC}), en particulier de telle sorte que
- - - la puissance DC d'installation photovoltaïque électrique (P_{PV_DC}) est maximale dans une plage allant d'une tension continue de circuit intermédiaire minimale (U_{MIN}) à une valeur de seuil (760) et/ou
- - - la puissance DC d'installation photovoltaïque électrique (P_{PV_DC}) descend proportionnellement dans une plage, en particulier plus large, allant d'une ou de la valeur de seuil (760) à une autre valeur de seuil (765), à laquelle la puissance DC d'installation photovoltaïque électrique (P_{PV_DC}) est nulle ;
- - une courbe caractéristique d'onduleur (420), qui commande l'onduleur (400) de telle sorte que l'onduleur (400) injecte de la puissance électrique dans le réseau d'alimentation électrique (2000) ou prélève de la puissance électrique du réseau d'alimentation électrique (2000), en particulier en fonction de la tension continue de circuit intermédiaire variable (U_{ZK_DC}), de manière préférée de telle sorte
- - - l'onduleur (400) prélève de manière proportionnellement croissante de la puissance électrique du réseau d'alimentation électrique (2000) dans une plage allant d'une tension continue de circuit intermédiaire minimale (U_{MIN}) à une valeur de seuil (720) et/ou
- - - l'onduleur (400) ne prélève pas de la puissance électrique du réseau d'alimentation électrique (2000) ni n'injecte de la puissance électrique dans le réseau d'alimentation électrique (2000) dans une plage, en particulier plus large, allant d'une ou de la valeur de seuil (720) à une autre valeur de seuil (740) et/ou
- - - l'onduleur (400) injecte de manière proportionnellement croissante de la puissance électrique dans le réseau d'alimentation électrique (2000) dans une plage, en particulier encore plus large, allant d'une ou de la valeur de seuil (740) à une autre valeur de seuil (750) ;
- - une courbe caractéristique de hacheur (432), qui commande un ou le dispositif de conversion (430) en fonction de la tension continue de circuit intermédiaire variable (U_{ZK_DC}), en particulier de telle sorte
- - - que le dispositif de conversion (430) prélève de manière proportionnellement croissante de la puissance électrique du réseau de tension continue électrique (300) dans une plage allant d'une valeur de seuil (780) à une tension continue de circuit intermédiaire maximale (U_{MAX}) ;
- - une courbe caractéristique d'accumulateur (520), qui commande un ou l'accumulateur électrique bidirectionnel (501) en fonction de la tension continue de circuit intermédiaire variable (U_{ZK_DC}), en particulier de telle sorte que
- - - l'accumulateur électrique bidirectionnel (501) injecte de manière proportionnellement croissante de la puissance électrique dans le réseau de tension continue électrique (300) dans une plage allant d'une valeur de seuil (740) à une autre valeur de seuil (730) et/ou
- - - l'accumulateur électrique bidirectionnel (501) ne prélève pas de puissance électrique du réseau de tension continue électrique (300) ni n'injecte de puissance électrique dans le réseau de tension continue électrique (300) dans une plage, en particulier plus large, allant d'une ou de la valeur de seuil (740) à autre une valeur de seuil (750) et/ou
- - - l'accumulateur électrique bidirectionnel (501) prélève de manière proportionnellement croissante de la puissance électrique du réseau de tension continue électrique (300) dans une plage, en particulier encore plus large, allant d'une ou de la valeur de seuil (750) à une autre valeur de seuil (760) ;
- - une courbe caractéristique de charge (620), qui commande une ou la charge unidirectionnelle (601) en fonction de la tension continue de circuit intermédiaire variable (U_{ZK_DC}), en particulier de telle sorte que
- - - la charge unidirectionnelle (601) prélève de manière proportionnellement croissante de la puissance électrique du réseau de tension continue électrique (300) dans une plage allant d'une valeur de seuil (730) à une autre valeur de seuil (720).

6. Système d'énergie électrique (1000) selon l'une quelconque des revendications précédentes, dans lequel
- la commande de courbes caractéristiques (700) présente au moins une valeur de seuil de tension continue de la liste suivante, comprenant :
- - une valeur de seuil (710), qui caractérise une tension continue de circuit intermédiaire minimale (U_{MIN}), à partir de laquelle le système d'énergie électrique est pris du réseau d'alimentation électrique ;
- - une valeur de seuil (720) jusqu'à ce que de plus le système d'énergie électrique prélève de la puissance électrique du réseau d'alimentation électrique (2000) ;
- - une valeur de seuil (740), à partir de laquelle le système d'énergie électrique injecte de la puissance électrique dans le réseau d'alimentation électrique (2000) ;
- - une valeur de seuil (750), à partir de laquelle un ou l'accumulateur électrique bidirectionnel (501) prélève de la puissance électrique du réseau de tension continue électrique (300) ;
- - une valeur de seuil (760), à partir de laquelle l'installation photovoltaïque est étranglée ;
- - une valeur de seuil (765) à partir de laquelle l'éolienne est étranglée ;
- - une valeur de seuil (780), à partir de laquelle un ou le dispositif de conversion (430) est activé en particulier pour éliminer en particulier l'excédent de puissance électrique du réseau de tension continue électrique (300) ;
- - une valeur de seuil (790), qui caractérise une tension continue de circuit intermédiaire maximale (U_{MAX}), à partir de laquelle le système d'énergie électrique est pris du réseau d'alimentation électrique.

7. Système d'énergie électrique (1000) selon l'une quelconque des revendications précédentes, comprenant en outre
- un système dynamique de gestion d'injection (810) et/ou de charges (820) et/ou d'accumulateur (830), lequel interagit en particulier avec la commande de courbes caractéristiques (700) de telle sorte que la tension continue de circuit intermédiaire (U_{ZK_DC}) est maintenue dans une plage admissible, de manière préférée entre une tension continue de circuit intermédiaire minimale (U_{MIN}) et une tension continue de circuit intermédiaire maximale (U_{MAX}) .

8. Système d'énergie électrique (1000) selon l'une quelconque des revendications précédentes, comprenant en outre
- une unité de commande (800), en particulier comprenant un tracker MPP (220), qui est mise au point pour régler sur la sortie d'onduleur (470) une puissance d'onduleur de sortie AC (P_{AC}) en fonction d'un point de travail de l'installation photovoltaïque (200), qui est injectée dans le réseau d'alimentation électrique (2000), en particulier par l'intermédiaire d'un transformateur (480) .

9. Système d'énergie électrique (1000) selon l'une quelconque des revendications précédentes, dans lequel
- la puissance nominale d'onduleur d'entrée DC (P_{DC}) est inférieure à la somme de la puissance nominale d'éolienne (P_{WEA_Nenn}) et de la puissance nominale d' installation photovoltaïque (Ppᵥ__{Nenn}), en particulier est inférieure en particulier à 80 % de la somme, de manière préférée est inférieure à 60 % de la somme, de manière particulièrement préférée est inférieure à 50 % de la somme.
